# EUROPÄISCHE PATENTANMELDUNG

(11) **EP 4 293 500 A1**
(43) Veröffentlichungstag der Anmeldung: **20.12.2023**
(21) Anmeldenummer: 22179661.8
(22) Anmeldetag: 17.06.2022
(51) Int. Cl.: G06F 8/65

(54) **AKTUALISIEREN EINER SOFTWARE DURCH EINE AUSZUFÜHRENDE UMSETZUNGSVARIANTE**

(71) Anmelder: Siemens Aktiengesellschaft, 80333 München (DE)
(72) Erfinder: Becker, Stefan, 91325 Adelsdorf (DE); Falk, Rainer, 85586 Poing (DE); Feist, Christian Peter, 80689 München (DE); Janssen, Henning, 76189 Karlsruhe (DE)
(74) Vertreter: Siemens Patent Attorneys

(57) **Zusammenfassung**

Die Erfindung betrifft ein Verfahren zum Aktualisieren (S3) einer Software eines technischen Systems,
mit den Schritten:
- Ein Bereitstellen (S1) von mindestens zwei Umsetzungsvarianten (11) des Aktualisierens (S3) der Software,
wobei den mindestens zwei Umsetzungsvarianten (11) jeweils eine Implikationsinformation (12), welche mindestens eine Implikation auf das technische System durch ein Ausführen der jeweiligen Umsetzungsvariante (11) angibt, zugeordnet ist,
- ein Heranziehen (S2) einer Auswahl, wobei abhängig von der Auswahl eine auszuführende Umsetzungsvariante (11) aus den mindestens zwei Umsetzungsvarianten (11) ausgewählt wird, und
- ein Aktualisieren (S3) der Software durch das Ausführen der auszuführenden Umsetzungsvariante (11).

Außerdem betrifft die Erfindung ein zugehöriges Computerprogrammprodukt und computerlesbares Medium.

## Beschreibung

### HINTERGRUND DER ERFINDUNG

### Gebiet der Erfindung

Die vorliegende Erfindung betrifft ein Verfahren zum Aktualisieren einer Software eines technischen Systems. Die Erfindung betrifft außerdem ein zugehöriges Computerprogrammprodukt und computerlesbares Medium.

### Beschreibung des Stands der Technik

In der Praxis muss davon ausgegangen werden, dass jede Software oder Firmware Schwachstellen aufweist. Daher ist wichtig, dass Software oder eine Firmware aktualisiert werden kann. Dabei wird ein Patch oder eine neue Version der Software oder Firmware eingespielt.

In industriellen Umgebungen und Operation Technology (OT) Umgebungen erfolgt, insbesondere aus anwenderseitigen Gründen, ein Aktualisieren der Software, insbesondere einer Firmware, jedoch häufig nur zeitverzögert, um Produktionsausfälle zu vermeiden. Zu solchen Produktionsausfällen kann es durch das Einspielen der neuen Software- oder Firmware-Version insbesondere kommen, wenn das betroffene Gerät dabei neu starten muss, oder wenn die aktualisierte Version zu Produktionsproblemen führt.

Bekannt ist, dass bei einem Patchen von Software oder Firmware ein Patch eingespielt wird, um die aktuelle Version der Software oder Firmware zu aktualisieren.

In der IT-Security ist ein Schwachstellen-Management bekannt. Dabei ist auch bekannt, dass eine Schwachstelle manuell auf unterschiedliche Art adressiert werden kann. Dabei handelt es sich um manuelle Handlungen, die sich ein Security-Manager basierend auf einer Risikoabwägung überlegen und vornehmen kann.

Unter dem Begriff "Virtual Patching" ist bekannt, dass das Ausnutzen einer vorhandenen Schwachstelle über ein Netzwerk verhindert wird, indem entsprechende Angriffsmuster in der Datenübertragung geblockt werden. Dazu kann z.B. eine Web Application Firewall WAF verwendet werden, die das Ausnutzen einer Schwachstelle in einer Web-Applikation verhindert.

Außerdem sind Tools für ein automatisiertes Patch-Management bekannt. Dadurch kann z.B. der Zeitpunkt zum Einspielen von Patchen so geplant werden, dass die Produktivität nur wenig leidet.

Bei Software-Installern ist bekannt, dass ein Nutzer einzelne zu installierenden Komponenten eines Software-Pakets auswählen kann. Hierbei werden einzelne auswählbare Komponenten in der Regel als Software-Features bezeichnet.

Außerdem sind Package-Manager zum Einspielen, Entfernen und Aktualisieren (Patchen) von Software-Paketen bekannt. Ein solcher Package Manager ist unter Linux das Tool "zypper". Beim Patchen kann über Optionen z.B. ausgewählt werden, ob alle Patches, auch als optional gekennzeichnete Patches eingespielt werden sollen, oder z.B. nur Patches, die sich auf eine bestimmte Schwachstelle oder Fehler-Code beziehen (durch Angabe einer Referenz auf eine CVE-Nummer einer Schwachstelle oder ein Bugzilla Issue).

Die Aufgabe der Erfindung besteht darin, eine Lösung für eine verbesserte Behebung von Schwachstellen bereitzustellen und gleichzeitig für den Anwender als negativ wahrgenommene Effekte zu minimieren.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft ein Verfahren zum Aktualisieren einer Software eines technischen Systems, mit den Schritten:
- Ein Bereitstellen von mindestens zwei Umsetzungsvarianten des Aktualisierens der Software,
   wobei den mindestens zwei Umsetzungsvarianten jeweils eine Implikationsinformation, welche mindestens eine Implikation auf das technische System durch ein Ausführen der jeweiligen Umsetzungsvariante angibt, zugeordnet ist,
- ein Heranziehen einer Auswahl, wobei abhängig von der Auswahl eine auszuführende Umsetzungsvariante aus den mindestens zwei Umsetzungsvarianten ausgewählt wird, und
- ein Aktualisieren der Software durch das Ausführen der auszuführenden Umsetzungsvariante.

Das Ausführen der jeweiligen Umsetzungsvariante ist auch als ein Einspielen und/oder ein Installieren der jeweiligen Umsetzungsvariante bezeichenbar.

Das Heranziehen einer Auswahl ist auch als ein Abrufen, Empfangen und/oder Entgegennehmen der Auswahl, insbesondere einer Benutzereingabe, bezeichenbar.

Wobei abhängig von der Auswahl eine auszuführende Umsetzungsvariante aus den mindestens zwei Umsetzungsvarianten ausgewählt wird, umfasst eine direkte und/oder eine indirekte Auswahl einer Umsetzungsvariante. Die auszuführende Umsetzungsvariante kann ausgewählt werden, indem sie in der Auswahl direkt genannt wird. Auch kann die auszuführende Umsetzungsvariante indirekt ausgewählt werden, indem die Auswahl eine akzeptierte Implikation betrifft und anhand der akzeptierten Implikation die zugehörige Umsetzungsvariante indirekt ausgewählt wird. So können einzelne Implikationen verschiedene Dauern an Betriebsstillstand sein, welche jeweils verschiedenen Umsetzungsvarianten zugeordnet sind. So kann der Nutzer in einer Ausführungsform vorab eine maximal akzeptierte Dauer des Betriebsstillstands angeben. Diese Dauer ist die Auswahl und davon abhängig wird die auszuführende Umsetzungsvariante ausgewählt.

Die Erfindung ist insbesondere von Vorteil zur Reaktion auf einen Bug und/oder eine Schwachstelle der Software. Die Umsetzungsvarianten sind auch als verschiedenen Lösungen bezeichenbar, welche insbesondere alle eine Reaktion auf den Bug und/oder die Schwachstelle bieten. Die Umsetzungsvarianten haben insbesondere unterschiedlich invasiven Umfang und dadurch Implikationen auf Betrieb des technischen Systems. Dadurch sind einzelne Umsetzungsvarianten gegenüber anderen je nach aktuellen Betriebsumständen des technischen Systems von Vorteil. Die Implikationsinformation wird insbesondere in Form von für den Benutzer interpretierbaren Text und/oder maschinen-interpretierbaren Code bereitgestellt.

Eine Grundidee der Erfindung besteht somit darin, eine Aktualisierung, insbesondere einen Patch, für zumindest eine Schwachstelle oder allgemein für einen Bug mit mehreren Umsetzungsvarianten bereitzustellen. Jede Umsetzungsvariante soll das Ausnutzen der zumindest einen Schwachstelle verhindern. Der Begriff "Patch" und der Begriff "Konfiguration" sind dabei breit zu verstehen. Es wird damit allgemein ein Aktualisieren einer Software oder Firmware bezeichnet.

Der Anwender, auch als der Betreiber des technischen Systems zu verstehen, hat dadurch eine höhere Flexibilität, mit dem Einspielen der Aktualisierung der Software umzugehen: Er kann sich nicht nur entscheiden, ob der Patch eingespielt wird oder nicht, sondern er kann eine Umsetzungsvariante des Patches auswählen. Dadurch können unerwünschte Auswirkungen auf die Produktivität vermieden werden.

Dies hat den Vorteil, dass ein Patch auf eine Art umgesetzt werden kann, die den laufenden Betrieb einer OT-Umgebung, insbesondere einer Produktion, möglichst wenig beziehungsweise nur auf eine tolerierbare Art beeinträchtigt. Auch ist es möglich, kurzfristig eine schnelle Behebung umzusetzen, insbesondere ein Deaktivieren des Geräte-Web-Servers, um dann zu einem späteren, besser passenden Zeitpunkt die aufwändigere Umsetzungsvariante zu verwenden, insbesondere ein Firmware-Update.

In einer Weiterbildung der Erfindung betrifft die Auswahl eine Implikation. In dieser Ausführungsvariante wird durch die Auswahl eine auszuführende Umsetzungsvariante aus den mindestens zwei Umsetzungsvarianten in Abhängigkeit der mindestens einen Implikation ausgewählt. Der Nutzer wählt eine akzeptierte Implikation anhand der Implikationsinformation aus, darauf basierend wird die zugehörige Umsetzungsvariante automatisch ausgewählt und ausgeführt, d.h. installiert. Der Nutzer wählt somit indirekt anhand der Implikation eine Umsetzungsvariante aus.

In einer weiteren Variante kann der Anwender stattdessen eine Einzelfallentscheidung treffen, d.h. je Patch einzeln und direkt auswählen, welche Umsetzungsvariante verwendet wird.

Vorzugsweise kann er jedoch Regeln konfigurieren, um eine Umsetzungsvariante automatisch auszuwählen. Dazu ist im Patch einer Umsetzungsvariante eine automatisiert auswertbare Information zugeordnet, die die Implikationen charakterisiert, die sich beim Einspielen dieser Variante ergeben oder zumindest ergeben könnten. In dieser weiteren Weiterbildung der Erfindung ist die Auswahl als mindestens eine vorab definierte Nutzerregel ausgebildet. Die Nutzerregel weist insbesondere akzeptierte Implikationen auf. Die Nutzerregel wird in Bezug zu den tatsächlichen Implikationen, beschrieben durch die Implikationsinformation, gesetzt und ausgewertet. Anhand der akzeptieren Implikationen wird die zugehörige oder die am nächsten kommende Umsetzungsvariante ausgewählt.

Denkbar ist auch die Bereitstellung eines Monitoring-Systems, das alle möglichen Varianten an Umsetzungsmöglichkeiten "entsprechender Patch oder Alternativen" anzeigt, mit Hilfe einer Auswertungsfunktion bewertet und dem Operator oder dem Kunden so eine Übersicht an Handlungsoptionen aufzeigt. In einem weiteren Schritt kann der Operator oder Kunde die für ihn geeignetste Option durch bestimmte Nutzerregeln, auch als Policy-Einstellungen bezeichenbar, voreinstellen, so dass die Umsetzung automatisch abläuft.

Auf Basis dieser Information kann ein Patch-Management-Tool (oder eine Patch-Installer-Komponente auf dem Zielgerät) eine Implementierungs-Option automatisch, d.h. ohne Nutzer-Interaktion, auswählen, deren zugeordnete Implikationen gemäß einer vorgegebenen Nutzerregel, auch als Richtlinie oder Policy bezeichenbar, zulässig sind.

In einer weiteren Weiterbildung der Erfindung umfasst die mindestens eine Implikation auf das technische System:
- Eine Betriebsunterbrechung, insbesondere mit deren Dauer, und/oder
- eine funktionale Einschränkung, insbesondere dahingehend, dass kein Remote Service oder keine Gerätekonfiguration über eine graphische Nutzerschnittstelle eines Web-Servers mehr möglich ist, und/oder
- eine funktionale Einschränkung einer Hauptfunktion, insbesondere eine Steuerungs- oder Überwachungsfunktion eines Steuergeräts zur Steuerung oder Überwachung eines technischen Systems, insbesondere einer Maschinensteuerung und/oder
- eine Leistungseinbuße, auch als Performance-Einbuße bezeichenbar, und/oder
- ein Erfordernis eines erneuten Konfigurierens des technischen Systems und/oder
- ein Erfordernis eines erneuten Ladens von Projektierungsdaten auf das technische System, und/oder
- ein Erfordernis eines Provisionierens von kryptographischen Schlüsseln.

Die Implikation tritt durch das Ausführen der jeweiligen Umsetzungsvariante auf, dies umfasst ein Auftreten während und/oder nach dem Ausführen der jeweiligen Umsetzungsvariante.

In einer weiteren Weiterbildung der Erfindung umfassen die mindestens zwei Umsetzungsvarianten:
- Ein Aktualisieren einer Firmware des technischen Systems, insbesondre ein Einspielen eines komplettes Firmware-Updates und/oder
- Mehrere Umsetzungsvarianten, die jeweils auf unterschiedliche Sub-Komponenten des zu aktualisierenden technischen Systems angewendet werden, d.h. auf denen jeweils ein Firmware-Update/Konfigurations-Update vorgenommen werden kann, insbesondere auf dem eigentlichen Steuergerät oder auf einem IO-Modul oder einem Kommunikationsmodul des technischen Systems und/oder
- ein Live-Patching einer laufenden Firmware des technischen Systems, insbesondere im laufenden Betrieb und/oder ohne Reboot und/oder
- ein Ändern einer Konfigurationseinstellung, um das Ausnutzen einer Schwachstelle in einer betroffenen Software-Komponente zu verhindern, insbesondere Sperren eines Remote-Zugangs zu einem Web-Server des technischen Systems oder ein Deaktivieren von Konfigurationsoptionen wie insbesondere eine Autokonfiguration auf eine Netzwerkschnittstelle und/oder
- ein Aktivieren eines Schreibschutzes für einzelne Speicherbereiche, Dateien oder Dateisysteme des technischen Systems und/oder
- ein Sperren von einer nicht kryptographisch authentisierter Netzwerkkommunikation und/oder
- ein Aktualisieren einer Filterregel einer Firewall des technischen Systems.

In einer weiteren Weiterbildung der Erfindung ist das technische System ausgebildet als:
- Ein industrielles Internet-of-Things-(IoT-)Gerät und/oder
- ein Gerät einer Operation-Technology-(OT-)Umgebung und/oder
- ein Steuergerät und/oder
- eine virtuelle Automatisierungsfunktion und/oder
- ein virtualisiertes Steuergerät und/oder
- ein IoT-Gerät.

In einer weiteren Weiterbildung der Erfindung bleibt eine erste Umsetzungsvariante der mindestens zwei Umsetzungsvarianten bestehen, bis eine zweite Umsetzungsvariante der mindestens zwei Umsetzungsvarianten ausgeführt wird. Dadurch ist die erste Umsetzungsvarianten insbesondere nicht zurücknehmbar. In dieser Variante der Erfindung wird das Zurücknehmen der Konfigurationsänderung insbesondere so lange gesperrt bleiben, bis eine andere Umsetzungsvariante ausgeführt wurde. So kann insbesondere ein Web-Server (erste Umsetzungsvariante) erst dann wieder aktiviert werden, wenn die Umsetzungsvariante "Firmware-Update" (zweite Umsetzungsvariante) vorgenommen wurde. Dadurch ergibt sich der Vorteil, dass kurzfristig getroffene Maßnahmen, insbesondere ein Ändern von Konfigurationseinstellungen, nicht versehentlich zurückgesetzt werden, wenn dem jeweiligen Anwender nicht bekannt ist, dass diese zum Schutz einer Schwachstelle vorgesehen sind.

Weiterhin ist es bei einer anderen Realisierungsvariante möglich, dass eine Live-Patch-Umsetzungsvariante, die im laufenden Betrieb aktivierbar ist, bestehen bleibt und auch bei einem Neustart des technischen Systems erneut umgesetzt wird, solange bis eine Firmware-Update-Umsetzungsvariante umgesetzt ist.

Weiterhin ist es möglich, ein Roll-Back einer bereits vorgenommene Umsetzungsvariante automatisch vorzunehmen, wenn eine andere Umsetzungsvariante eingespielt wird. Dadurch ergibt sich der Vorteil, dass kurzfristig getroffene Maßnahmen, insbesondere ein Ändern von Konfigurationseinstellungen, automatisch wieder zurückgesetzt werden oder ein Ändern wieder ermöglicht wird, wenn dies zum Schutz vor einer Schwachstelle nicht mehr erforderlich ist.

Außerdem kann so, zu einem späteren Zeitpunkt, insbesondere wenn sich Betriebsbedingungen geändert haben, eine weitere, insbesondere umfassendere, Umsetzungsvariante ausgeführt werden.

In einer weiteren Weiterbildung der Erfindung stellt das Aktualisieren der Software ein Beheben einer Schachstelle einer vorherigen Version der Software dar. In diesem Zusammenhang hat die Erfindung den Vorteil, dass auf die Schwachstelle zeitnah reagiert werden kann, ohne dass es zu starken oder nicht tolerierbaren Betriebseinschränkungen kommen muss.

In einer weiteren Weiterbildung der Erfindung wird die Schwachstelle durch jede der mindestens zwei Umsetzungsvarianten ausgeräumt. Darunter ist zu verstehen, dass jede der mindestens zwei Umsetzungsvarianten die Schwachstelle behebt oder ihr entgegnet, so dass die Schwachstelle nicht mehr von Angreifern nutzbar ist.

In einer weiteren Weiterbildung der Erfindung weist das Verfahren den weiteren Schritt auf:
- Ein Dokumentieren des Ausführens der auszuführende Umsetzungsvariante, wodurch eine abfragbare Information bereitgestellt wird, welche angibt, ob das Aktualisieren durch die auszuführende Umsetzungsvariante stattgefunden hat.

In einer weiteren Weiterbildung der Erfindung weist das Verfahren den weiteren Schritt auf:
- ein Abfragen der abfragbaren Information.

Diese Ausführungsformen haben den Vorteil, zu automatisch abzufragen und zu prüfen, ob möglicherweise eine Umsetzungsvariante, wie insbesondere deaktivierter Web-Server, ohnehin schon umgesetzt ist. Dann kann der Patch dokumentiert werden und damit als "eingespielt" gelten, ohne dass die eigentliche Konfiguration überhaupt geändert werden muss. "Eingespielt" bedeutet hierbei, in einem Patch-Management-System eine Information zu verwalten, dass eine Umsetzungsvariante des Patches umgesetzt ist.

In einer weiteren Weiterbildung der Erfindung weist das Verfahren den weiteren Schritt auf:
- ein Erstellen einer Bewertung der mindestens eine Implikation in Relation zu einem Zustand und/oder einer Konfiguration des technischen Systems,
   wobei außerdem abhängig von der Bewertung die auszuführende Umsetzungsvariante aus den mindestens zwei Umsetzungsvarianten ausgewählt wird.

In dieser Variante der Erfindung kann dabei als Kriterium bewertet werden, ob eine Umsetzungsvariante eines Patches eine Datei aktualisiert oder löscht, die aktuell auf dem betroffenen System durch einen laufenden Prozess in Benutzung ist.

Weiterhin ist es möglich, dass ein Patch-Management-Tool oder Patch-Installer zunächst die Relevanz möglicher Implikationen prüft und bewertet. D.h. die angegebenen Implikationen treten nicht in allen Fällen tatsächlich auf, sondern nur unter bestimmten Voraussetzungen, insbesondere abhängig vom Betriebszustand, laufenden Prozessen, vorhandenen Dateien. In dieser Variante würde vorab überprüft und bewertet werden, welche Implikationen im konkreten Fall tatsächlich zu erwarten sind, um die effektiven Implikationen zu ermitteln, die Grundlage für die Auswahl einer geeigneten Implementierungs-Option sind.

Weiterhin ist es möglich, dass einer Implementierungs-Option jeweils ein Bewertungsprogrammcode zugeordnet ist, der zur Ermittlung der jeweils sich ergebenden effektiven Implikation anzuwenden ist. Der Bewertungsprogrammcode kann insbesondere durch eine Referenz, insbesondere eine URI, oder explizit durch einen Bytecode oder einen Binärcode oder ein Programmcodeskript angegeben sein. Dieser wird vor Auswahl und Einspielen einer Implementierungs-Variante ausgeführt, um die jeweils erwartete effektive Implikation dynamisch, abhängig von der konkreten Umgebung, zu ermitteln. Der Bewertungsprogrammcode kann insbesondere durch das Patchmanagementsystem ausgeführt werden. Es ist jedoch auch möglich, dass der Bewertungsprogrammcode auf die betroffene Zielkomponente geladen und dort ausgeführt wird, um auf dieser die erwarteten Implikationen zu ermitteln, die bei der Umsetzung der Implementierungs-Option zu erwarten sind. Der Bewertungsprogrammcode selbst kann dabei für jede Implementierungs-Option separat vorliegen und unterschiedlich sein. Es ist jedoch ebenso möglich, dass ein Bewertungsprogrammcode die effektiven Implikationen für mehrere Implementierungs-Optionen ermittelt und bereitstellt.

In einer weiteren Weiterbildung der Erfindung ist den mindestens zwei Umsetzungsvarianten außerdem jeweils eine Dringlichkeitsinformation, welche mindestens eine Dringlichkeit des Ausführens der jeweiligen Umsetzungsvariante angibt, zugeordnet, wobei außerdem abhängig von der Dringlichkeit die auszuführende Umsetzungsvariante aus den mindestens zwei Umsetzungsvarianten ausgewählt wird. Die Dringlichkeit umfasst insbesondere wie sicherheitskritisch ein Aktualisieren der Software ist.

Die Erfindung umfasst außerdem ein Computerprogrammprodukt, umfassend ein Computerprogramm, wobei das Computerprogramm in eine Speichereinrichtung einer Recheneinheit ladbar ist, wobei mit dem Computerprogramm die Schritte eines Verfahrens nach einem der Ansprüche 1 bis 13 ausgeführt werden, wenn das Computerprogramm auf der Recheneinheit ausgeführt wird.

Die Erfindung umfasst außerdem ein computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines Verfahrens nach einem der Ansprüche 1 bis 13 ausgeführt werden, wenn das Computerprogramm auf der Recheneinheit ausgeführt wird.

Die Erfindung bietet den Vorteil, dass Schwachstellen schneller und ohne die Verfügbarkeit der Produktion unzulässig zu beeinträchtigen adressiert werden, sodass sie nicht mehr ausgenutzt werden können.

Insbesondere kann eine den Betrieb mit hoher Verlässlichkeit nicht betreffende Live-Patching-Implementierungsoption zeitnah eingespielt werden, um dann zu einem späteren, besser passenden Zeitpunkt den regulären, technischen Patch, insbesondere ein Firmware-Update, einzuspielen. Dies kann dann insbesondere während eines geplanten Wartungsfensters erfolgen. Die Abhängigkeiten zwischen den unterschiedlichen Patch-Varianten können automatisiert ausgewertet werden.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand der schematischen Zeichnungen ersichtlich.

Es zeigen
- Fig. 1: eine schematische Darstellung einer Aktualisierung einer Software und
- Fig. 2: ein Ablaufdiagramm des erfindungsgemäßen Verfahrens.

### DETAILLIERTE BESCHREIBUNG DER ERFINDUNG

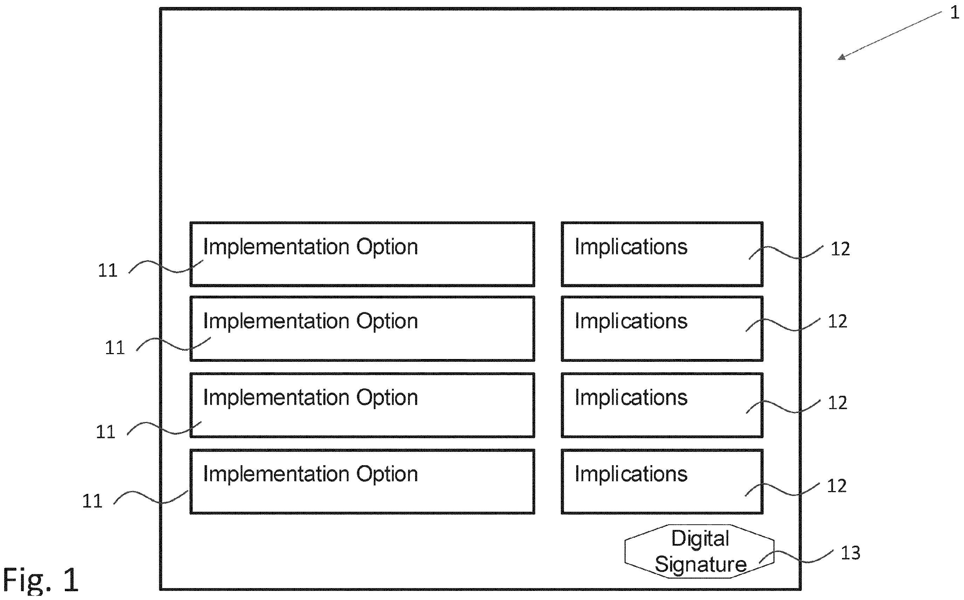

Fig. 1 zeigt eine Aktualisierung 1 einer Software, auch als ein Patch 1 bezeichenbar, mit mehreren Umsetzungsvarianten 11. Zugeordnet sind die sich daraus ergebenden Implikationen 12 enthalten, vorzugsweise als beschreibender Text und codiert in maschinenlesbarer Form. Implikationen 12 können beispielsweise angeben, ob:
- das Aktivieren im laufenden Betrieb des Geräts möglich ist (also ohne Betriebsunterbrechung) und/oder
- wie lange eine Betriebsunterbrechung ist (z.B. 5 Minuten oder 4h), und/oder
- es während des Einspielens zu funktionalen Einschränkungen der Hauptfunktion kommt, insbesondere dass temporär eine Funktion zur Steuerung oder Überwachung eines technischen Systems nicht mehr verfügbar ist, und/oder
- es nach Einspielen zu Performance-Einbußen des technischen Systems kommt, und/oder
- es nach Einspielen zu funktionalen Einschränkungen des technischen Systems kommt (z.B. kein Remote Service oder keine Gerätekonfiguration über eine graphische Nutzerschnittstelle mehr möglich), oder
- nach dem Einspielen das Gerät neu konfiguriert werden muss, und/oder
- Projektierungsdaten neu geladen werden müssen, und/oder
- kryptographische Schlüssel erneut provisioniert werden müssen, und/oder
- Dateien, die aktuell durch einen laufenden Prozess in Benutzung sind oder sein könnten, aktualisiert werden, insbesondere Libraries.

In einer Variante kann dabei als Kriterium zu den Implikationen ausgewertet werden, ob eine Umsetzungsvariante eines Patches 1 eine Datei aktualisiert oder löscht, die aktuell auf dem betroffenen System durch einen laufenden Prozess in Benutzung ist.

Zu dem Patch 1 können Metadaten, Anbieter, Zielgeräte, eine Dringlichkeit und ein Erscheinungsdatum angegeben werden.

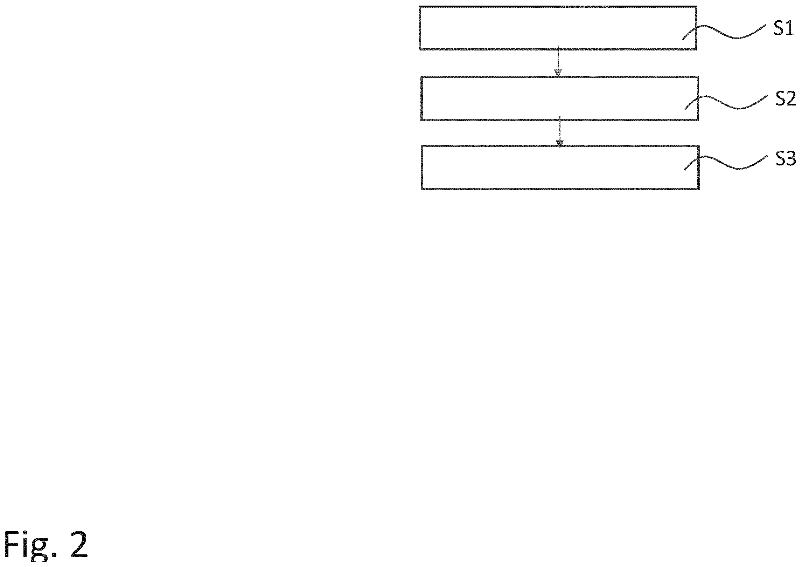

Fig. 2 zeigt ein Ablaufdiagramm des erfindungsgemäßen Verfahrens zum Aktualisieren einer Software eines technischen Systems, mit den Schritten:
- Schritt S1: Ein Bereitstellen von mindestens zwei Umsetzungsvarianten des Aktualisierens der Software,
   wobei den mindestens zwei Umsetzungsvarianten jeweils eine Implikationsinformation, welche mindestens eine Implikation auf das technische System durch ein Ausführen der jeweiligen Umsetzungsvariante angibt, zugeordnet ist,
- Schritt S2: ein Heranziehen einer Auswahl, wobei abhängig von der Auswahl eine auszuführende Umsetzungsvariante aus den mindestens zwei Umsetzungsvarianten ausgewählt wird, und
- Schritt S3: ein Aktualisieren der Software durch das Ausführen der auszuführenden Umsetzungsvariante.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Verfahren zum Aktualisieren (S3) einer Software eines technischen Systems,
mit den Schritten:
- Ein Bereitstellen (S1) von mindestens zwei Umsetzungsvarianten (11) des Aktualisierens (S3) der Software,
wobei den mindestens zwei Umsetzungsvarianten (11) jeweils eine Implikationsinformation (12), welche mindestens eine Implikation auf das technische System durch ein Ausführen der jeweiligen Umsetzungsvariante (11) angibt, zugeordnet ist,
- ein Heranziehen (S2) einer Auswahl, wobei abhängig von der Auswahl eine auszuführende Umsetzungsvariante (11) aus den mindestens zwei Umsetzungsvarianten (11) ausgewählt wird, und
- ein Aktualisieren (S3) der Software durch das Ausführen der auszuführenden Umsetzungsvariante (11).

2. Verfahren nach Anspruch 1,
wobei die Auswahl eine Implikation betrifft, und
wobei durch die Auswahl eine auszuführende Umsetzungsvariante (11) aus den mindestens zwei Umsetzungsvarianten (11) in Abhängigkeit der mindestens einen Implikation ausgewählt wird.

3. Verfahren nach einem der vorhergehenden Ansprüche,
wobei die Auswahl als mindestens eine vorab definierte Nutzerregel ausgebildet ist.

4. Verfahren nach einem der vorhergehenden Ansprüche,
wobei die mindestens eine Implikation auf das technische System umfasst:
- Eine Betriebsunterbrechung während und/oder
- eine funktionale Einschränkung und/oder
- eine Leistungseinbuße und/oder
- ein Erfordernis eines erneuten Konfigurierens des technischen Systems und/oder
- ein Erfordernis eines erneuten Ladens von Projektierungsdaten auf das technische System, und/oder
- ein Erfordernis eines Provisionierens von kryptographischen Schlüsseln.

5. Verfahren nach einem der vorhergehenden Ansprüche,
wobei die mindestens zwei Umsetzungsvarianten (11) umfassen:
- Ein Aktualisieren einer Firmware des technischen Systems und/oder
- Mehrere Umsetzungsvarianten, die jeweils auf unterschiedliche Sub-Komponenten des technischen Systems angewendet werden, wobei die Sub-Komponenten insbesondere als ein Steuergerät, ein IO-Modul und/oder ein Kommunikationsmodul des technischen Systems ausgebildet sind und/oder
- ein Live-Patching der Software des technischen Systems und/oder
- ein Ändern einer Konfigurationseinstellung der Software, wodurch insbesondere ein Ausnutzen einer Schwachstelle verhindert wird und/oder
- ein Sperren eines Zugangs zu einem Web-Server und/oder
- ein Deaktivieren einer Konfigurationsoption auf eine Netzwerkschnittstelle und/oder
- ein Aktivieren eines Schreibschutzes für einen Speicherbereich, eine Datei und/oder ein Dateisystem des technischen Systems und/oder
- ein Sperren einer nicht kryptographisch authentisierter Netzwerkkommunikation und/oder
- ein Aktualisieren einer Filterregel einer Firewall des technischen Systems.

6. Verfahren nach einem der vorhergehenden Ansprüche,
wobei das technische System ausgebildet ist als:
- Ein industrielles Internet-of-Things-(IoT-)Gerät und/oder
- ein Gerät einer Operation-Technology-(OT-)Umgebung und/oder
- ein Steuergerät und/oder
- eine virtuelle Automatisierungsfunktion und/oder
- ein virtualisiertes Steuergerät und/oder
- ein IoT-Gerät.

7. Verfahren nach einem der vorhergehenden Ansprüche,
wobei eine erste Umsetzungsvariante der mindestens zwei Umsetzungsvarianten (11) bestehen bleibt, bis eine zweite Umsetzungsvariante der mindestens zwei Umsetzungsvarianten (11) ausgeführt wird.

8. Verfahren nach einem der vorhergehenden Ansprüche,
wobei das Aktualisieren (S3) der Software ein Beheben einer Schachstelle einer vorherigen Version der Software darstellt.

9. Verfahren nach Anspruch 8,
wobei die Schwachstelle durch jede der mindestens zwei Umsetzungsvarianten (11) ausgeräumt wird.

10. Verfahren nach einem der vorhergehenden Ansprüche,
mit dem weiteren Schritt:
- Ein Dokumentieren des Ausführens der auszuführende Umsetzungsvariante (11), wodurch eine abfragbare Information bereitgestellt wird, welche angibt, ob das Aktualisieren (S3) durch die auszuführende Umsetzungsvariante (11) stattgefunden hat.

11. Verfahren nach Anspruch 10,
mit dem weiteren Schritt:
- ein Abfragen der abfragbaren Information.

12. Verfahren nach einem der vorhergehenden Ansprüche,
mit dem weiteren Schritt:
- ein Erstellen einer Bewertung der mindestens eine Implikation in Relation zu einem Zustand und/oder einer Konfiguration des technischen Systems,
wobei außerdem abhängig von der Bewertung die auszuführende Umsetzungsvariante (11) aus den mindestens zwei Umsetzungsvarianten (11) ausgewählt wird.

13. Verfahren nach einem der vorhergehenden Ansprüche,
wobei den mindestens zwei Umsetzungsvarianten (11) außerdem jeweils eine Dringlichkeitsinformation, welche mindestens eine Dringlichkeit des Ausführens der jeweiligen Umsetzungsvariante (11) angibt, zugeordnet ist,
wobei außerdem abhängig von der Dringlichkeit die auszuführende Umsetzungsvariante (11) aus den mindestens zwei Umsetzungsvarianten (11) ausgewählt wird.

14. Computerprogrammprodukt, umfassend ein Computerprogramm, wobei das Computerprogramm in eine Speichereinrichtung einer Recheneinheit ladbar ist, wobei mit dem Computerprogramm die Schritte eines Verfahrens nach einem der Ansprüche 1 bis 13 ausgeführt werden, wenn das Computerprogramm auf der Recheneinheit ausgeführt wird.

15. Computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines Verfahrens nach einem der Ansprüche 1 bis 13 ausgeführt werden, wenn das Computerprogramm auf der Recheneinheit ausgeführt wird.
